Europäisches Patentamt

European Patent Office

Office européen des brevets

(11) Veröffentlichungsnummer: **0 377 859**

**A1**

(12) **EUROPÄISCHE PATENTANMELDUNG**

(21) Anmeldenummer: **89123292.8**

(22) Anmeldetag: **15.12.89**

(51) Int. Cl.⁵: **B23D 33/02, B23D 15/06**

(30) Priorität: **12.01.89 DE 3900719**

(43) Veröffentlichungstag der Anmeldung:
**18.07.90 Patentblatt 90/29**

(84) Benannte Vertragsstaaten:
**AT BE CH DE ES FR GB IT LI NL SE**

(71) Anmelder: **Karl Eugen Fischer GmbH Maschinenfabrik**

**D-8622 Burgkunstadt(DE)**

(72) Erfinder: **Schlüter, Klaus, Dipl.-Ing. (FH)**
**Unterer Pelzhügel 15**
**D-8630 Coburg(DE)**

(74) Vertreter: **Patentanwälte Czowalla . Matschkur + Partner**
**Dr.-Kurt-Schumacher-Strasse 23 Postfach 9109**
**D-8500 Nürnberg 11(DE)**

(54) **Spannzange, insbesondere zum Einspannen von Flachteilen in Blechschneidzentren.**

(57) Spannzange (4), insbesondere zum Einspannen von Flachteilen in Blechschneidzentren, mit gegenüberliegend zusammenwirkenden Spannbacken (27, 30), und einem extern ortsfest angebrachten Halterungsteil (3) mit Verbindungsglied (5), über welches ein Tragteil (7) relativ zum Halterungsteil (3) begrenzt bewegbar angekuppelt ist, wobei an oder in dem Tragteil (7) eine erste Spannbacke (30) fix und eine zweite, gegenüberliegende Spannbacke (27) relativ zur ersten bewegbar mittels eines Stellantriebs (18-22) angeordnet sind, welcher - gegen den Tragteil (7) abgestützt - an der zweiten Spannbacke (27) angreift zwecks Verstellung von deren Abstand zur ersten Spannbacke (30).

FIG. 1

EP 0 377 859 A1

## Spannzange, insbesondere zum Einspannen von Flachteilen in Blechschneidzentren

Die Erfindung betrifft eine Spannzange, insbesondere zum Einspannen von Flachteilen in Blechschneidzentren, mit gegenüberliegend zusammenwirkenden Spannbacken. Als Flachteile kommen vor allem Tafeln oder Platten aus Metall, insbesondere Fein-, Mittel- oder Grobblech, in Frage, die mittels Tafelblechscheren bzw. Winkelschermaschinen verarbeitet werden.

Eine bekannte Querteilschere für Walzbleche, insbesondere für Grobbleche (DE-OS 27 28 202) ist mit Klemmzangen der eingangs genannten Art kombiniert. Diese weisen jeweils zwei zweiarmige Hebel auf, von denen jeder um eine eigene, parallel zur Blechebene gerichtete Achse verschwenkbar gelagert ist, wobei die Schwenkachsenpaare mit vorbestimmtem Abstand übereinander liegen. Jeweils am Ende des einen Hebelarms sind Klemmbacken gelenkig aufgehängt, während zwischen die Enden der anderen Hebelarme ein Klemmantrieb, z.B. ein Druckmittelzylinder, eingeschaltet ist. Die zur Realisierung der Schwenkachsen der Hebel notwendigen Gelenke sind außerordentlichen mechanischen Belastungen ausgesetzt und müssen deshalb robust und aufwendig aufgebaut sein. Damit im geöffneten Zustand die Klemmzange immer eine solche Lage einnimmt, daß der auslaufseitige Blechabschnitt sicher zwischen deren beiden Klemmbacken einläuft, sind an den durch den Klemmantrieb gekuppelten Hebelarmen der zweiarmigen Hebel-Ausbalancierungsgewichte notwendig, welche einen Justiervorgang erfordern und zudem Masse-, Gewicht-und Energieverbrauch erhöhen. Schließlich sind bei dieser bekannten Klemmzange die Hebelarmlängen konstruktiv begrenzt, was zu einer verhältnismäßig geringen Öffnungsweite der Klemmzange für einzuspannende Flachteile führt. Vor al lem wenn die Flachteile an ihren Rändern über eine Biegung nach oben/unten auslaufen, ist die mit der bekannten Klemmzange erzielbare Öffnungsweite häufig nicht ausreichend. Zudem ergibt sich bei Flachteilen mit gebogenen Rändern mit der bekannten Klemmzange die Schwierigkeit, daß lediglich einer der gegenüberliegenden Klemmbackenpaare zur sicheren und festen Anlage an das Flachteil kommt, während der Bewegungsspielraum des gegenüberliegenden Klemmbackens aufgrund der Konstruktion mit notwendig begrenzten Hebelarmlängen für eine sichere Anlage nicht ausreicht.

Dieser Probleme nimmt sich die Erfindung an, indem sie die Aufgabe löst, eine einfach aufgebaute und kostengünstig herstellbare sowie mechanisch robuste Klemm- bzw. Spannzange zu schaffen, welche vor allem gegenüber Flachteilen mit gebogenen Rändern eine hohe Betriebssicherheit und -zuverlässigkeit aufweist.

Zur Lösung wird erfindungsgemäß vorgeschlagen, bei einer Spannzange mit den eingangs genannten Merkmalen einen extern ortsfest angebrachten Halterungsteil mit Verbindungsglied vorzusehen, über welches ein Tragteil relativ zum Halterungsteil begrenzt bewegbar angekuppelt ist, wobei an oder in dem Tragteil eine erste Spannbacke fix, und eine zweite gegenüberliegende Spannbacke relativ zur ersten bewegbar mittels eines Stellantriebs angeordnet sind, welcher - gegen den Tragteil abgestützt - an der zweiten Spannbacke angreift zwecks Verstellung von deren Abstand zur ersten Spannbacke.

Mit diesem erfindungsgemäßen Konstruktionsprinzip wird beim Einspannen von Flachteilen folgender, zweiphasiger Bewegungsablauf geschaffen: In der ersten Phase wirkt der Stellantrieb auf die zweite Spannbacke ein, so daß diese auf das einzuspannende Flachteil so lange zubewegt wird, bis die zweite Spannbacke zur Anlage an das Flachteil kommt; dabei sind selbstverständlich der Stellantrieb und/oder die Dicke des Flachteiles so ausgelegt, daß das Andrücken der zweiten Spannbacke nicht zur Verbiegung des Flachteiles führen kann. Ist infolge dessen die Bewegung der zweiten Spannbacke relativ zum Flachteil gestoppt, bewegt in der zweiten Bewegungsphase der Stellantrieb - nunmehr gegen die zweite Spannbacke abgestützt - relativ zu dieser den Tragteil und mithin die hieran befestigte, erste Spannbacke auf die gegenüberliegende zweite zu. Die zweite Bewegungsphase endet, wenn der erste Spannbacken ebenfalls an der entgegengesetzten Seite des Flachteiles zur Anlage kommt. Sie wird ermöglicht durch die bewegliche Ankopplung der ersten Spannbacke mit damit fixiertem Tragteil mittels des Verbindungsglieds an den Halterungsteil. Der zweistufige Bewegungsablauf erlaubt eine flexible Anpassung an unterschiedlich gebogene oder gewellte Flachteile, weil in jeder Stufe/Phase gesondert einer der einander paarweise gegenüberliegenden Spannbacken zum Aufliegen auf das Flachteil geführt wird. Da jede der aufeinander folgenden Bewegungsphasen erst mit dem Auftreffen der entsprechenden Spannbacke endet, ist eine feste, zuverlässige Einspannung für einen sicheren Weiterverarbeitungsbetrieb auf einem Tisch gewährleistet, auf welchem das Flachteil liegt bzw. gleitet.

Eine spezielle Ausbildung der Erfindung besteht darin, die Bewegungen des Tragteils (mit erster Spannbacke) und/oder der zweiten Spannbacke geradlinig zu führen. Damit werden in vorteilhafter Weise empfindliche, aufwendig aufgebaute Gelenkstellen zur Bewegungsrealisierung vermieden. Zudem lassen sich mit linear geführten Spannbacken zwischen diesen in geöffnetem Zustand große Abstände (Öffnungsweiten) realisieren, so daß Flachteile auch mit großdimensionierten Wellungen und Biegungen eingespannt werden können.

Nach einer anderen zweckmäßigen Weiterbildung sind der Tragteil und die zweite Spannbacke jeweils mit einer Lagerung dergestalt versehen, daß deren beide Bewegungen zueinander konzentrisch - im Falle von Dreh- bzw. Schwenkbewegungen - oder zueinander parallel - im Falle der Lagerung mit zuvor genannten Linearführungen - verlaufen.

Da in der ersten Bewegungsphase die Kraft (bzw. das Drehmoment), welche auf die zweite Spannbacke wirkt, ihren Ursprung im der Spannbacke gegenüber beweglichen Tragteil hat, wirkt nach dem Reaktionsprinzip der Physik auf den Tragteil die entgegengesetzt gleiche Kraft (bzw. Drehmoment). Diese Reaktionskraft kann die nicht überlappende Aufeinanderfolge der beiden genannten Bewegungsphasen stören. Dem wird mit einer anderen speziellen Ausbildung der Erfindung begegnet, nach welcher die Führungen des Tragteils und der zweiten Spannbacke jeweils in Richtung der Schwerkraft verlaufend ausgerichtet sind, wobei die am Tragteil befindliche Abstützstelle des Stellantriebs oberhalb von dessen Angriffsstelle an der zweiten Spannbacke bzw. diese oberhalb der ersten Spannbacke angeordnet sind. Die vorteilhafte Wirkung dieser Anordnung der Spannbacke-Angriffsstelle unter der Tragteil-Abstützstelle, wodurch bedingt die erste Spannbacke unterhalb der zweiten liegt, besteht darin, daß der an der Abstützstelle auftretenden Reaktionskraft das Gewicht des Tragteils samt erster Spannbacke entgegengesetzt wird, was in praktischen Fällen eine weitgehende Kompensation der Reaktionskraft ergibt.

Im Rahmen der Erfindung liegen viele Realisierungsmöglichkeiten des Stellantriebs. Besonders zweckmäßig ist der Ein satz eines vorzugsweise hydraulisch betriebenen Druckmittelzylinders hierfür, da er zum Auslösen von Dreh-/Schwenkbewegungen oder Linearbewegungen gleichermaßen geeignet ist.

In dieser Hinsicht besteht eine der Erfindung besonders entsprechende, vorteilhafte Ausführung des Stellantriebs darin, einen zylindrischen Kolben vorzusehen, der in einer im Tragteil komplementär ausgebildeten, an einem Stirnende abgeschlossenen Zylinderbohrung axial bewegbar (vorzugsweise durch Druckmittel) geführt ist und an seinem dem offenen Stirnende der Zylinderbohrung nächstliegenden Ende mit der zweiten Spannbacke verbunden ist. Bei dieser speziellen Ausführung läßt sich der Arbeitsraum des Stellantriebs platzsparend mit dem Tragteil baulich vereinen, wobei eine kompakte und Kolbenbewegungen schützende Bauform entsteht. Zudem läßt sich die Zylinderbohrung verhältnismäßig lang ausbilden, so daß für die Kolben- und Spannbackenbewegungen mit Vorteil ein außerordentlicher Arbeitshub entsteht. Besonders herstellungstechnisch ist es zweckmäßig, Antriebskolben und die zweite Spannbacke miteinander einstückig (integriert) auszuführen. Bei dieser mit Kolben und Arbeitszylinder realisierten Antriebsart sind Druckluft oder Flüssigkeit für die Leistungsübertragung besonders geeignete Medien. Mithin läßt sich mit Vorteil die Erfindung dadurch weiterbilden, daß der Tragteil gehäuseförmig ausgebildet ist und dabei den druckmittelbetriebenen Stellantrieb umgibt, und daß von außen in den Tragteil zwei Wechselventile eingelassen sind; von diesen führt jeweils eine Fluidleitung zu einer von zwei Ein-/Auslaßöffnungen, die in der Wandung der Zylinderbohrung ausgebildet sind und je in eine von zwei Druckmittel-Kammern münden, welche zwischen der Wandung und dem Kolben ringförmig umlaufend und voneinander axial versetzt sowie dicht getrennt gebildet sind. Um die Fluidleitungen vor externen, rauhen Umgebungsbedingungen zu schützen, sind diese vorzugsweise in dem als Gehäuse ausgebildeten Tragteil untergebracht. Mit Hilfe der beiden Wechsel-/Mehrwegeventile lassen sich gezielt Druckgefälle von einer Ringkammer zur anderen in beide axiale Richtungen aufbauen, wodurch dem Kolben mit der daran befestigten zweiten Spannbacke entsprechend hin- und hergehende Bewegungen in axialer Richtung erteilt werden.

Der bereits oben erläuterte Erfindungsgedanke, die aus der Abstützung des Stellantriebs am Tragteil resultierende Reaktionskraft mit dem Tragteil-Eigengewicht zu kompensieren, läßt sich in Verbindung mit dem druckmittelbewegten Kolben in der Zylinderbohrung zweckmäßig dadurch umsetzen, daß die Zylinderbohrung vertikal ausgerichtet ist und am unteren Stirnende offen ist, so daß die beiden Druckmittel-Kammern entsprechend untereinander angeordnet sind. Dabei ist die obere Kammer von oben durch das obere, abgeschlossene Stirnende der Zylinderbohrung axial begrenzt bzw. abgedich-tet, während die untere Kammer von unten durch einen ring-förmigen Dichtungsvorsprung, der auf der Bohrungswandung ausgebildet ist, axial begrenzt bzw. abgedichtet wird. Zur dichten Abtrennung der oberen Kammer von der unteren eig-net sich ein weiterer, mit Dichtungsmitteln versehener Vorsprung, der beispielsweise auf der Kolbenwandung ausgebildet sein kann.

Bei der Realisierung des Stellantriebs mit axial beweglichen Kolben ist eine Zugriffsmöglichkeit auf den Kolben und/oder dessen Arbeitsraum innerhalb der Zylinderbohrung, z.B. zu Reparatur- oder Austauschzwecken wünschenswert. Infolge dessen dient es der Erleichterung der Wartung und Instandhaltung, wenn nach einer weiteren Ausbildung der Erfindung die Zylinderbohrung an ihrem abgeschlossenen Stirn ende mit einem Deckel mit Dichtungsmittel verschlossen ist, welcher im Bereich des der zweiten Spannbacke abgewandten (verschlossenen) Stirnendes der Zylinderbohrung in der Tragteilwand herausnehmbar befestigt ist. Zur Herbeiführung einer ausreichend sicheren Abdichtung der Druckmittel-Kammern eignen sich besonders in Aufnahmenuten in der Kolben-und/oder Bohrungswandung eingepreßte Ringdichtungen, welche der kreiszylindrischen Grundform angepaßt sind.

Im Ruhezustand der erfindungsgemäßen Spannzange, mit durch Kolben-/Arbeitszylinder realisierten Stellantrieb, wenn sich zwischen den Spannbacken keine einzuklemmenden Flachteile befinden, stellt sich das Problem, daß bei drucklosen Fluidleitungen kein Druckgefälle von der unteren Ringkammer zur oberen besteht, und der Kolben mit der zweiten Spannbacke aufgrund deren Eigengewicht aus der Zylinderbohrung herausfallen kann. Zur Abhilfe ist nach einer weiteren Ausbildung der Erfindung in der Wandung der Zylinderbohrung, vorzugsweise im Bereich von deren unter, offenen Stirnende, eine im Querschnitt lippenförmige Dichtung ringförmig um den Kolben bzw. die zweite Spannbacke angeordnet, wobei die gegebenenfalls durch Einpassung vorgespannte Dichtungslippe radial nach innen gegen die Kolbenwandung mit Eigenspannung anliegt und dabei eine Reibwirkung erzeugt, welche dem Herausfallen des Kolbens aus seinem Arbeitsraum entgegenwirkt. Zudem wird die Abdichtung gegen Fluidaustritt verbessert.

Bei Anbringung der zweiten Spannbacke am aus der Zylinderbohrung austretenden Kolbenende besteht eine zweckmäßige Ausbildung der ersten Spannbacke darin, dieser eine im wesentlichen plattenförmige Form zu verleihen, wobei - im Schnitt quer zur Einspannseite der Plattenfläche - die Spannbacke eine L-profilförmige Auskragung besitzt, deren Auflagefläche für eine bessere Reibung geriffelt ist.

Um die Bewegungen des Tragteils gegenüber dem Halterungsteil je nach Einsatzbedingungen begrenzen zu können, kann bei der erfindungsgemäßen Spannzange eine einstellbare Anschlageinrichtung vorgesehen sein. Vor allem wenn der Tragteil mittels einer Linearführung (z.B. Schlittenführung) angekuppelt ist, ist es von Vorteil, die Anschlageinrichtung mit einer vom Tragteil beabstandeten und am Halterungsteil befestigten Anschlagplatte mit Durchgangsbohrung zu versehen, wobei durch die Durchgangsbohrung eine Schraube geführt und teilweise in den Tragteil hinein- bzw. herausschraubbar ist; die Anschlagbegrenzung wird dann durch Hängenbleiben des Kopfes der Schraube, der einen größeren Durchmesser als die Druchgangsbohrung besitzt und sich auf der vom Tragteil abgewandten Seite der Anschlagplatte befindet, daran erst zielt. Der Erweiterung der Einstellmöglichkeiten dient eine Weiterführung dieses Gedankens, wonach zwischen dem Tragteil und der Anschlagplatte eine Einstellmutter vorgesehen ist, deren Innengewinde mit dem Außengewinde der Schraube hin- und herdrehbar in Eingriff steht.

Weitere Vorteile, Merkmale und Einzelheiten der Erfindung ergeben sich aus der nachfolgenden Beschreibung eines Ausführungsbeispiels sowie anhand der Zeichnung. Dabei zeigt:

Figur 1 teilweise im Schnitt eine Seitenansicht auf das Ausführungsbeispiel der erfindungsgemäßen Spannzange, die sich etwa in der ersten Bewegungsphase befindet,

Figur 2 eine Ansicht entsprechend Figur 1 mit derselben Spannzange in der zweiten Bewegungsphase, und

Figur 3 eine Draufsicht auf die Spannzange gemäß Figur 1 oder Figur 2, wobei die Linie A-B den in Figuren 1 und 2 gezeigten Schnittdarstellungen entspricht.

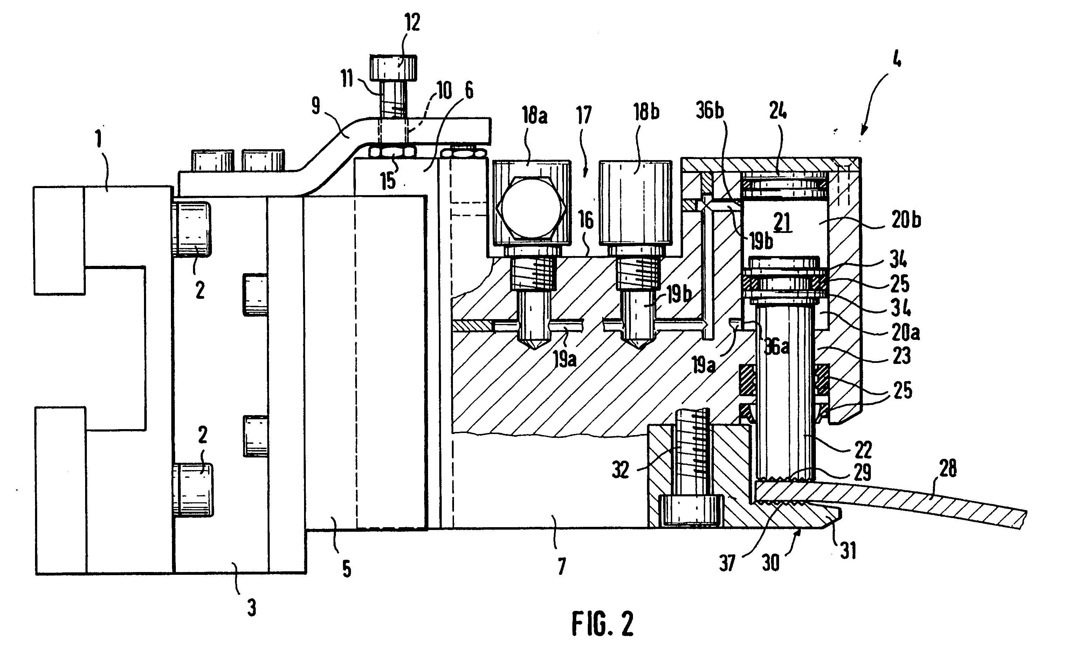

Wie aus dem gezeichneten Ausführungsbeispiel ersichtlich, ist an einer Halteplatte 1 beispielsweise eines Koordinatenvorschubes mittels Schrauben 2 der Halterungsteil 3 der Spannzange 4 unbeweglich (ortsfest) befestigt. Der Halterungsteil 3 ist an seiner von der Halteplatte 1 abgewandten Seite mit einer Linearführung 5 versehen, in welche eine Führungsschiene 6 des Tragteils 7 der Spannzange 4 eingerückt ist. Durch das Zusammenwirken der Linearführung 5 mit der Führungsschiene 6 werden dem Tragteil 7, sofern er gegenüber dem Halterungsteil 3 verstellt wird, geradlinige Hin- und Herbewegungen 8 erteilt. Zu deren Begrenzung ist am Halterungsteil 3 eine Anschlagplatte 9 angeschraubt, welche etwa in deren mittleren Bereich mit einer Durchgangsbohrung 10 versehen ist (in Figur 2 gestrichelt angedeutet). Von der dem Tragteil 7 abgewandten Seite der Anschlagplatte 9 aus ist durch die Durchgangsbohrung 10 eine Einstellschraube 11 geschoben, wobei deren Schraubenkopf 12 einen größeren Durchmesser besitzt als die Durchgangsbohrung 10 und infolgedessen auf der dem Tragteil 7 abgewandten Seite der Anschlagplatte 9 verbleibt. Um für die Bewegungen 8 des Tragteils 7 gegenüber dem Halterungsteil 3 einen genügenden Spielraum bzw. Hub zu schaffen, erstreckt sich die Anschlagplatte 9 von deren Befestigungsstelle am Halterungsteil 3 auskragend und mittels eines gekröpften Abschnittes 13 in einem Abstand 14 zum Tragteil 7. Der Durchmesser des mit Außengewinde versehenen Abschnitts der Einstellschraube 11 ist so dimensioniert, daß diese in der Durchgangsbohrung 10 im Rahmen des eingestellten Bewegungs spiels axial frei bewegt werden kann. Mit dem Außengewinde der

4

Einstellschraube 11 kämmt das Innengewinde einer Einstellmutter 15, die sich zwischen der Anschlagplatte 9 und dem Tragteil 7 befindet. Die Schlüsselweite der Einstellmutter 15 - ebenso wie der Außendurchmesser des Schraubenkopfs 12 - ist größer als der Innendurchmesser der Durchgangsbohrung 10, so daß diese bei anschlagender Bewegung an der Anschlagplatte 9 hängenbleibt.

Das Profil der Außenwandung 16 des Tragteils 7 bildet eine Aussparung 17, in deren Bereich zwei Winkel-Einschraubverschraubungen 18a, 18b in die Außenwandung 16 eingebaut sind. Sie stehen mit einer (nicht dargestellten) Druckluft-oder vorzugsweise Hydraulikversorgung in Verbindung. Im Inneren des Tragteils 7 sind Fluidleitungen 19a, 19b aus-gebildet, welche Wegeventile (nicht dargestellt) mit je-weils einer der beiden Ringkammern 20a, 20b verbinden, die in der Zylinderbohrung 21 in Verbindung mit dem darin axial geführten Kolben 22 gebildet sind. Die erstere Ringkammer 20a ist durch einen Dichtungsvorsprung 23 begrenzt, der auf der Wandung der Zylinderbohrung 21 ausgebildet ist, während die zweite Ringkammer 20b von einem abgedichteten Deckel 24 begrenzt ist, der den stirnseitigen Abschluß der Zylinderbohrung 21 bildet. Als Dichtungsmittel dienen Ringdichtungen 25, von denen eine im Bereich des offenen Stirnendes der Zylinderbohrung 21 eine im Querschnitt lippenförmige Gestalt (vergleiche die an die Wandung des Kolbens 22 angedrückte Lippe 26) besitzt.

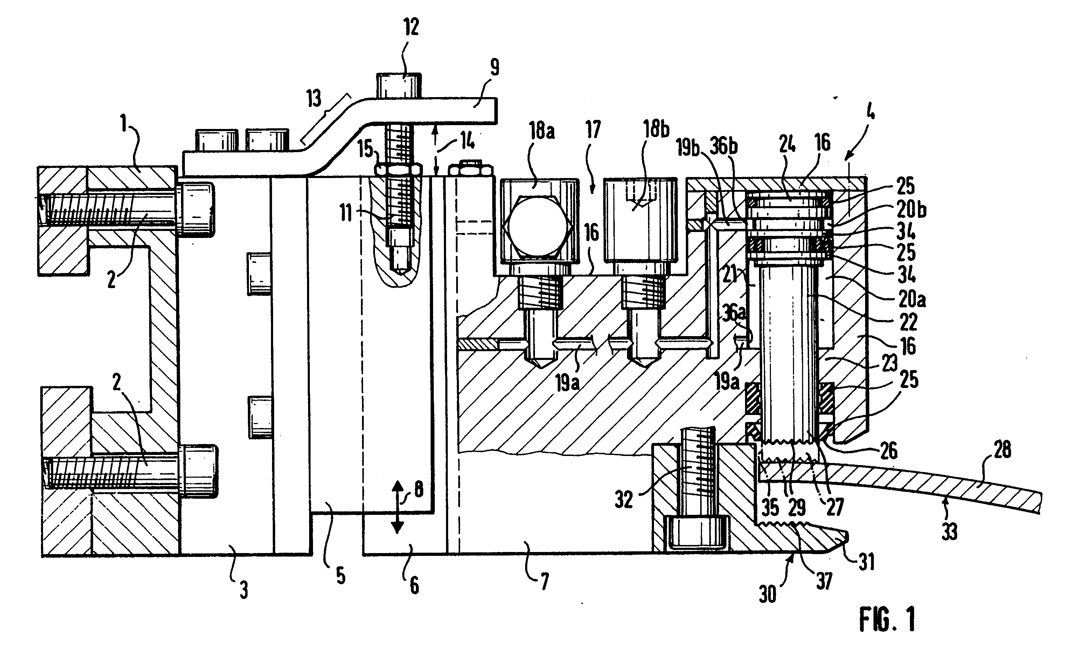

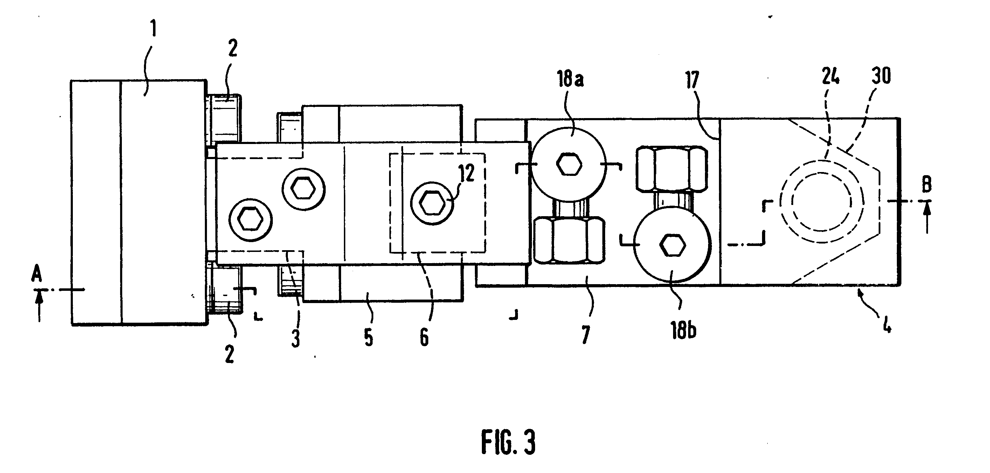

An dem aus der Zylinderbohrung 21 auslaufenden Ende des Kolbens 22 ist eine der beiden gegenüberliegenden Spannbacken - gemäß der eingangs eingeführten Terminologie die "zweite" Spannbacke - angeformt (vergleiche Bezugsziffer 27). Zur sicheren Halterung eines einzuspannenden Flach teils 28 ist die Spannfläche der zweiten Spannbacke 27 mittels einer Riffelung 29 aufgerauht. Der zweiten Spannbacke 27 gegenüberliegend angeordnet ist die - eingangs als "erste" bezeichnete Spannbacke 30, welche in der Draufsicht gemäß Figur 3 etwa plattenförmig mit Riffelung 37 ausgebildet ist und im Querschnitt gemäß Figuren 1 oder 2 in der Form eines L-Schenkels 31 auskragt. Die erste Spannbacke 30 ist am Tragteil 7 fest (unbeweglich) angebracht; als Befestigungsmittel dienen Montageschrauben 32, welche zum Beispiel bei notwendigem Austausch der fest angebrachten Spannbacke 30 gelöst werden kann und mithin die Instandhaltung der gesamten Spannzange 4 fördert. Der Randbereich des Flachteils 28, der über eine Biegung 33 mit dem restlichen (abgebrochen gezeichneten) Flachteil verbunden ist, ragt in den Raum zwischen der ersten Spannbacke 30 und der zweiten Spannbacke 27 hinein.

Der eingangs erläuterten ersten Bewegungsphase entspricht die in Figur 1 gezeigte Stellung des Kolbens 22. Die erste Ringkammer 20a weist hier maximales Volumen, und die zweite Ringkammer 20b minimales Volumen auf. Die beiden Ringkammern 20a, 20b sind durch einen weiteren Dichtungsvorsprung 34, der von der Wandung des Kolbens 22 absteht, voneinander dicht abgetrennt. Maximales Volumen der ersten Ringkammer 20a und minimales Volumen der zweiten Ringkammer 20b bedeutet, daß sich der Kolben 22 im in die Zylinderbohrung 21 voll eingefahrenen Zustand befindet. Die erste Bewegungsphase wird dann dadurch ausgelöst, daß über das zweitgenannte Wechselventil 18b und die dazugehörige Fluidleitung 19b Druckmittel in die zweitgenannte Ringkammer 20b eingeführt wird, so daß dort ein höherer Druck als in der ersten Ringkammer 20a entsteht. Diese Druckdifferenz erzwingt einen Auslauf des Kolbens 22 aus der Zylinderbohrung 21, bis die am Kolben angeformte, zweite Spannbacke 27 auf das Flachteil 28 auftrifft. Das Auftreffen ist in Figur 1 gestrichelt angedeutet und mit der Bezugsziffer 35 markiert.

Nach dem Auftreffen 35 der zweiten Spannbacke 27 auf dem Flachteil 28 wird der Druck in der zweitgenannten Ringkammer 20b und mithin deren Volumen weiter vergrößert. Da das Flachteil 28 aufgrund seiner Stärke sich trotz der Krafteinwirkung durch den Kolben 22 nicht verbiegt, wird nunmehr - kennzeichnend für die zweite Bewegungsphase - der Tragteil 7 gemäß Bewegungsrichtung 8 längs der Linearführung 5, 6 so lange zur Anschlagplatte 9 hin bewegt, bis die dem Flachteil 28 zugewandte Seite des L-Schenkels 31, die die Spannfläche der ersten Spannbacke 30 bildet, auf das Flachteil vollständig aufliegt und/oder der Tragteil 7 mit der Einstellmutter 15 an der Anschlagplatte 9 anliegt. Beide Bedingungen sind in Figur 2 als gleichzeitig (kumulativ) gegeben dargestellt. Jedoch reicht die Erfüllung einer der beiden Bedingungen aus, um die zweite Bewegungsphase zu beenden; dem Ende der zweiten Bewegungsphase entspricht die Darstellung in Figur 2.

In der Draufsicht gemäß Figur 3 sind alle sichtbaren Teile der Spannzange 4, die in Figuren 1 und 2 mit Bezugszeichen versehen sind, mit denselben Bezugszeichen markiert, so daß sich die weitere Erläuterung der Draufsicht für den Fachmann erübrigt.

Die Erfindung ist nicht auf das in Figuren 1 bis 3 dargestellt Ausführungsbeispiel beschränkt. So könnte an Stelle der Linearführung 5 auch ein entsprechend robust ausgeführtes Gelenk eingesetzt werden, welches dann statt einer Linearbewegung eine Schwenkbewegung für den Tragteil gegenüber dem Halterungsteil realisiert. Analoges gilt für den linearen Stellantrieb 20a, b, 21, 22 gemäß Figuren 1 - 3.

Ferner könnte - an Stelle des im Inneren des gemäß Figuren 1 - 3 gehäuseförmigen Tragteiles 7 untergebrachten Stellantrieb - ein Stellzylinder außen am Tragteil 7 angebracht sein und an der entsprechend zugänglichen, zweiten Spannbacke angreifen.

**Ansprüche**

1. Spannzange, insbesondere zum Einspannen von Flachteilen in Blechschneidzentren, mit gegenüberliegend zusammenwirkenden Spannbacken, gekennzeichnet durch einen extern ortsfest angebrachten Halterungsteil (3) mit Verbindungsglied (5), über welches ein Tragteil (7) relativ zum Halterungsteil (3) begrenzt bewegbar angekuppelt ist, wobei an oder in dem Tragteil (7) eine erste Spannbacke (30) fix und eine zweite, gegenüberliegende Spannbacke (27) relativ zur ersten (30) bewegbar mittels eines Stellantriebs (18-22) angeordnet sind, welcher - gegen den Tragteil (7) abgestützt - an der zweiten Spannbacke (27) angreift zwecks Verstellung von deren Abstand zur ersten Spannbacke (30).

2. Spannzange nach Anspruch 1, dadurch gekennzeichnet, daß die Bewegungen (8) des Tragteils (7) und/oder der zweiten Spannbacke (27) linear geführt (5,6,21) sind.

3. Spannzange nach Anspruch 1 oder 2, dadurch gekennzeichnet, daß der Tragteil (7) und die zweite Spannbacke (27) jeweils mit einer Lagerung dergestalt versehen sind, daß deren beide Bewegungen zueinander parallel oder konzentrisch verlaufen.

4. Spannzange nach Anspruch 2, dadurch gekennzeichnet, daß die Führungen (5,6,21) des Tragteils (7) und der zweiten Spannbacke (27) jeweils in Richtung der Schwerkraft verlaufend ausgerichtet sind, wobei die am Tragteil (7) befindliche Abstützstelle (24) des Stellantriebs (18-22) oberhalb von dessen Angriffsstelle (20b,22) an der zweiten Spannbacke (27) bzw. diese oberhalb der ersten Spannbacke (30) angeordnet sind.

5. Spannzange nach einem der vorhergehenden Ansprüche, gekennzeichnet durch einen vorzugsweise hydraulischen Druckmittelzylinder als Stellantrieb (18-22).

6. Spannzange nach einem der vorhergehenden Ansprüche, dadurch gekennzeichnet, daß der Stellantrieb (18-22) einen zylindrischen Kolben (22) aufweist, der in einer im Tragteil (7) komplementär ausgebildeten, an einem Stirnende abgeschlossenen (24) Zylinderbohrung (21) vorzugsweise durch Druckmittel (19) axial bewegbar geführt ist und an seinem dem offenen Stirnende der Zylinderbohrung (21) nächstliegenden Ende mit der zweiten Spannbacke (27) vorzugsweise einstückig verbunden ist.

7. Spannzange nach Anspruch 6, gekennzeichnet durch einen druckmittelbetriebenen Stellantrieb (18-22) gehäuseförmig (16) umgebenden Tragteil (7), in dem von außen zwei Wechselventile (18a, 18b) eingelassen sind, von denen jeweils eine Fluidleitung (19a, 19b) vorzugsweise durch das Tragteilinnere zu einer von zwei Ein-/Auslaßöffnungen (36a, 36b) führt, die in der Wandung der Zylinderbohrung (21) ausgebildet sind und je in eine von zwei Druckmittel-Kammern (20a, 20b) münden, welche zwischen der Bohrungs-Wandung (21) und dem Kolben (22) ringförmig umlaufend und voneinander axial versetzt sowie dicht (25) getrennt gebildet sind.

8. Spannzange nach Anspruch 7, gekennzeichnet durch eine sich vertikal (8) erstreckende, nach unten offene Zylinderbohrung (21), deren oberes abgeschlossenes Stirnende (24) die obere Kammer (20b) von oben axial begrenzt bzw. abdichtet, durch einen ringförmigen Dichtungsvorsprung (34) der Kolbenwandung (22) zur Abtrennung der oberen Kammer (20b) von der unteren (20a), und durch einen weiteren ringförmigen Dichtungsvorsprung (23) der Bohrungswandung (21) zur axialen Begrenzung bzw. Abdichtung der unteren Kammer (20a) von unten.

9. Spannzange nach einem der Ansprüche 6-8, gekennzeichnet durch einen im Tragteil (7) abnehmbar eingelassenen Deckel (24) mit Dichtung (25) zum Verschluß des der zweiten Spannbacke (27) abgewandten Stirnendes der Zylinderbohrung (21).

10. Spannzange nach einem der Ansprüche 6-9, gekennzeichnet durch ein oder mehrere in Aufnahmenuten in der Kolben- und/oder Bohrungswandung (21,22) eingepreßte Ringdichtungen (25).

11. Spannzange nach einem der Ansprüche 8-10, dadurch gekennzeichnet, daß in der Wandung der Zylinderbohrung (21), vorzugsweise im Bereich von deren unteren, offenen Stirnende, eine im Querschnitt lippenförmige Dichtung (25) ringförmig um den Kolben (22) bzw. die zweite Spannbacke (27) angeordnet ist, wobei die Dichtungslippe (26) mit Vorspanndruck an der Kolben-bzw. Spannbackenwandung (21,22) anliegt.

12. Spannzange nach einem der Ansprüche 6-11, gekennzeichnet durch eine plattenförmige, erste Spannbacke (30), die vom Tragteil (7) - im Schnitt quer zur Spannfläche - mit einem L-Profil-Schenkel (31) auskragt.

13. Spannzange nach einem der vorhandenen Ansprüche, gekennzeichnet durch eine am Halterungsteil (3) befestigte, einstellbare Anschlageinrichtung (9-13) zur Begrenzung der Bewegung des Tragteils (7) gegenüber dem Halterungsteil (3).

14. Spannzange nach Anspruch 13, mit linear geführtem Tragteil (7), dadurch gekennzeichnet, daß die Anschlageinrichtung (9-13) eine vom Tragteil (7) beabstandete (14) und am Halterungsteil (3) befestigte Anschlagplatte (9) mit Durchgangsbohrung (10) aufweist, durch letztere eine Schraube (11) geführt und teilweise in den Tragteil (7) verstellbar eingeschraubt ist, wobei deren Schraubenkopf (12) einen größeren Durchmesser als die Durchgangsbohrung (10) besitzt.

15. Spannzange nach Anspruch 14, gekennzeichnet durch eine Einstellmutter (15), welche zwischen dem Tragteil (7) und der Anschlagplatte (9) mit dem Außengewinde der Schraube (11) drehbar in Eingriff steht.

FIG. 1

FIG. 2

EP 0 377 859 A1

FIG. 3

EP 0 377 859 A1

**Europäisches Patentamt**

# EUROPÄISCHER RECHERCHENBERICHT

EP 89123292.8

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int Cl⁵) |
|---|---|---|---|
| A | GB - A - 2 161 734 (EUMUCO) * Gesamt * -- | 1 | B 23 D 33/02 B 23 D 15/06 |
| A | SOVIET INVENTIONS ILLUS-TRATED, Sektion Ch, Woche 8538, 07. März 1985 DERWENT PUBLICATIONS LTD., London, M 21 * SU 1143-531-A (AZOV) * -- | | |
| D,A | DE - A1 - 2 728 202 (SCHLOEMANN-SIEMAG) * Gesamt * ---- | 1 | |

|  | RECHERCHIERTE SACHGEBIETE (Int Cl⁵) |
|---|---|
|  | B 23 D 15/00 B 23 D 33/00 |

Der vorliegende Recherchenbericht wurde für alle Patentansprüche erstellt.

| Recherchenort WIEN | Abschlußdatum der Recherche 06-03-1990 | Prüfer KRUMPSCHMID |
|---|---|---|